**Europäisches Patentamt**

**European Patent Office**

**Office européen des brevets**

(19)

(11) Veröffentlichungsnummer: **0 069 110**
**B1**

(12)

# EUROPÄISCHE PATENTSCHRIFT

(45) Veröffentlichungstag der Patentschrift:
15.01.86

(51) Int. Cl.⁴: **A 01 D 34/73**

(21) Anmeldenummer: **82890083.7**

(22) Anmeldetag: **01.06.82**

(54) **Messer für Rasenmäher.**

(30) Priorität: **09.06.81 AT 2556/81**

(43) Veröffentlichungstag der Anmeldung:
**05.01.83 Patentblatt 83/1**

(45) Bekanntmachung des Hinweises auf die Patenterteilung:
**15.01.86 Patentblatt 86/3**

(84) Benannte Vertragsstaaten:
**CH DE FR GB IT LI SE**

(56) Entgegenhaltungen:
**CH-A-363 842**
**DE-A-2 144 263**
**DE-B-1 632 861**
**FR-A-1 115 677**
**GB-A-1 183 174**
**US-A-3 665 692**

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Kopf, Herbert, Schulstrasse 16, A-3332 Rosenau/Sonntagberg (AT)**
Erfinder: **Bamminger, Erwin, Leopold Weberstrasse 42, A-3333 Böhlerwerk (AT)**
Erfinder: **Marchard, Gustav, Unterzellerstrasse 81, A-3340 Waidhofen an der Ybbs (AT)**

(74) Vertreter: **Widtmann, Georg, Dr., Vereinigte Edelstahlwerke Aktiengesellschaft (VEW) Elisabethstrasse 12, A-1010 Wien (AT)**

EP 0 069 110 B1

## Beschreibung

Die Erfindung bezieht sich auf ein Messer für einen Rasenmäher mit rotierender Schneideinrichtung, welches zumindest an zwei einander diagonal gegenüberliegenden Endbereichen seiner Längskanten mit Schneiden versehen ist und dessen in Drehrichtung des Messers hinter den Schneiden liegenden Längskanten gegenüber den Schneiden erhöht verlaufen und mit mindestens einem zur Aufnahme von Verbindungselementen vorgesehenen Durchbruch versehener Mittelbereich.

Ein derartiges Messer ist z.B. durch die DE-AS 16 32 861 bekannt geworden. Dieses bekannte Messer ist aus einem gestanzten Blech mit im wesentlichen rechteckigem Querschnitt hergestellt. Bei der Herstellung eines solchen Messers kam es häufig im Zuge des Härtens zu einem beträchtlichen Verzug des Messers, wodurch der Anteil der einzelnen Richtarbeit sehr hoch ist.

Diese Messer weisen so wie alle anderen bekannten Messer lediglich in ihrem Endbereich Schneiden auf, wohingegen in ihrem mittleren Bereich keine Schneiden vorgesehen sind. Es kommt jedoch auch der mittlere Bereich eines Messers, wie auf Grund der Abnützung der Messer leicht festzustellen, in intensivem Kontakt mit dem Gras, wobei es zu Zerquetschungen des Grashalmes kommt, wodurch der nachfolgende Schnitt nicht immer glatt ist, sodaß der Halm nicht glatt abgeschnitten ist, sondern ein unregelmäßiges Ende aufweist, wodurch ein hoher Saftverlust bedingt ist, was zur bekannten braunen Verfärbung der Endbereiche des Grases führt.

Ziel der Erfindung ist, diese Nachteile zu vermeiden und das erfindungsgemäße Messer besteht im wesentlichen darin, daß das Messer einen durchgebenden Querschnitt mit durchgehenden Scneiden aufweist, der in an den Längskanten angrenzenden Zonen eine gegenüber dem mittleren Bereich größere Dicke aufweist, wobei die Dicke des mittleren Bereiches, vorzugsweise 1/2 bis 2/3 der Dicke der Randzonen und die Breite der Randzonen vorzugsweise etwa 15 bis 30 % der gesamten Breite beträgt. Dadurch wird ein Messer erhalten, das einerseits über die gesamte Länge eine gleichmäßige Schnittleistung hat, wobei zwar im mittleren Bereich das Gras auf einer Höhe abgeschnitten wird, welche sodann durch die Schneiden im äußeren Bereich des Messers korrigiert werden muß, wobei jedoch jegliche Quetschungen des Grashalmes vermieden werden können. Weiters wird durch eine derartige Ausgestaltung des Profiles erreicht, daß eine geringere Belastung der Welle des Motors bedingt ist, da die Masse des Messers wesentlich herabgesetzt werden kann, wobei gleichzeitig die Steifigkeit des Messers jedoch erhöht wird. Diese Erhöhung der Steifigkeit des Messers ist von hoher Bedeutung, da auf diese Art und Weise ein Verbiegen des Messers von bzw.

zur Achse verhindert wird, welches eine extreme Unwucht des Messers verursachen könnte, wodurch die Lager der in der Regel relativ einfach auszugestaltenden, da ein geringes Gewicht erwünscht, Motoren hoch belastet werden würden.

Ist das Querschnittsprofil des Messers so ausgebildet, daß es zwei zueinander senkrecht stehende Symmetrieebenen aufweist, wobei die mit Schneiden versehenen Randbereiche des Messers um dessen Längsachse gegensinnig verdreht, vorzugsweise im wesentlichen jedoch eben sind, so wird ein Messer erhalten, das so ausgestaltet ist, daß bei Abnützung der einander diametral gegenüberliegenden Schneidkanten das Messer lediglich demontiert und um seine Längsachse um 180° gedreht werden muß und erneut zum Einsatz kommen kann. Es wird somit ein wendbares Rasenmähermesser erhalten, das jedoch erst auf Grund der besonderen Formgebung einer derartig geringen Abnützung bei dem ersten Schneidvorgang unterliegt, wodurch die Unwucht des Messers noch so gering ist, daß ein weiterer Einsatz in geänderter Form möglich ist.

Weist das Querschnittsprofil des Messers eine von Längskante zu Längskante durchgehende gerade obere Kante und die Unterseite im Mittelbereich eine nutartige Ausnehmung auf, so wird dadurch erreicht, daß der Kontakt des bereits abgelängten Grashalmes mit dem Messer geringer ist, da der Grashalm in den Freiraum der Ausnehmung einfedern kann, wodurch erneut ein geringerer Flüssigkeitsverlust des Grases bedingt ist, wobei gleichzeitig eine negative Veränderung der Schnittfläche vermeidbar wird.

Ist lediglich eine schmale, die Schneidkanten aufweisende Randzone entlang der Längsränder vergütet, so wird dadurch erreicht, daß bei Extrembeanspruchungen des Messers, wie sie z.B. durch Steine u. dgl. im Normalbetrieb immer wieder gegeben sind, keine Stücke aus dem Messer herausbrechen, sondern es bleibt die Schneide, wenn auch leicht deformiert erhalten.

Ist der Übergang vom dünneren Mittelbereich zu den dickeren Randzonen mit einer hohlkehlenartigen Rundung versehen, so wird dadurch auch bei Bodenunebenheiten eine Quetschung des Grashalmes an einer relativ stumpfen Kante vermieden, da bei der Abrundung der Grashalm abgleiten kann, sodaß erneut eine Verletzung des Schnittendes vermieden wird.

Das erfindungsgemäße Verfahren zur Herstellung eines Messers besteht darin, daß ein entsprechendes Stahlprofil vorzugsweise durch Warmwalzen hergestellt wird, wonach im Durchlauf dessen Längskanten geschliffen, mittels Erwärmung, vorzugsweise durch Hochfrequenz und anschließenden Abschreckens gehärtet und angelassen, danach gerichtet und sodann abgelängt und in entsprechenden Abständen mit Aufbiegungen an den Längsseiten oder mit um die Längsachse gedrehten Abschnitten versehen und vorzugsweise gleichzeitig mit Durchbrüchen zur Aufahme von Befestigungselementen versehen wird. Dadurch ist erstmals ein kontinuierliches Verfahren zur Herstellung von Messern für Rasenmäher, die rotierend arbeiten, gegeben, da das Stahlprofil kontinuierlich durch eine Schleifvorrichtung, anschließend durch eine Hochfrequenz-Vergüteinrichtung und durch Richtrollen geführt werden kann, worauf das Profil in den gewünschten Längen abgelängt wird. Die bereits abgelängten Stücke können sodann beim Stanzen gleich mit den gewünschten Verdrehungen versehen werden.

Im folgenden wird die Erfindung an Hand der Zeichnungen näher erläutert.

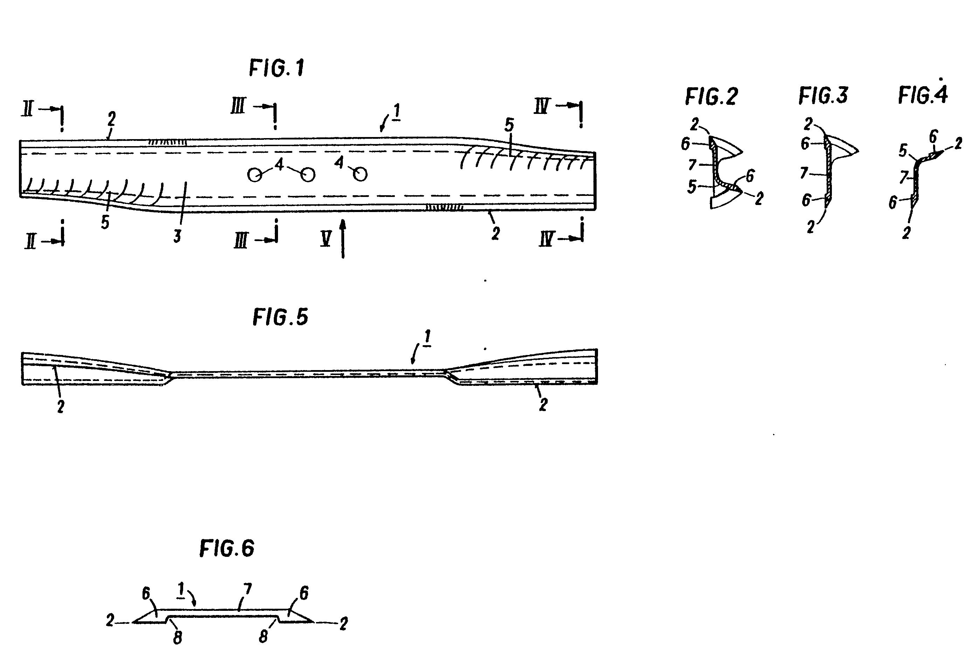

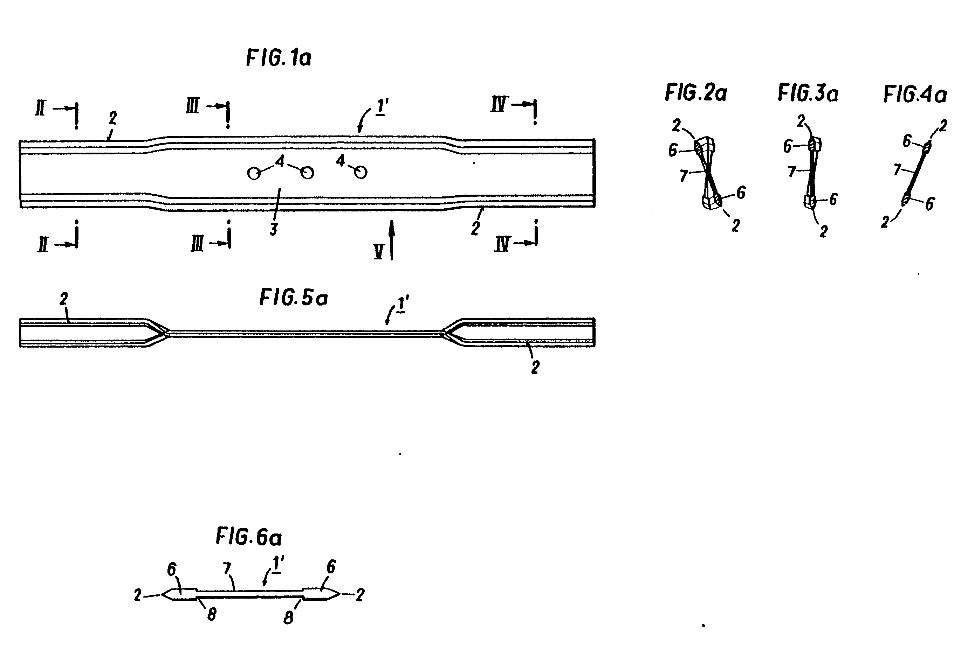

Es zeigen die Fig. 1 - 6 eine erste Ausführungsform eines erfindungsgemäßen Messers, wobei Fig. 1 das Messer in Draufsicht, die Fig. 2 - 4 Schnitte gemäß den mit II-II, III-III bzw. IV-IV bezeichneten Linien in Fig. 1, Fig. 5 eine Ansicht des Messers in Richtung der Pfeile V und Fig. 6 das Grundprofil des Messers vor seiner Verformung zeigt und die Fig. 1a bis 6a eine zweite Ausführungsform eines erfindungsgemäßen Messers zeigen, wobei die mit den gleichen Ziffern bezeichneten Figuren einander entsprechen.

Bei der Ausführungsform gemäß den Fig. 1 - 6 sind zwei einander diagonal gegenüberliegend angeordnete Schneidkanten 2 vorgesehen, die sich jeweils in einem aus der Ebene des in Längsrichtung des Messers 1 zwischen diesen befindlichen Mittelabschnittes 3 in gleicher Richtung herausgebogenen Abschnitt befinden (Fig. 5).

Im Mittelabschnitt 3 sind bei der dargestellten Ausführungsform drei Durchbrüche 4 zur Aufnahme von Befestigungselementen zur Fixierung des Messers 1 en der Welle des nicht dargestellten Rasenmähers vorgesehen.

Die in Drehrichtung des Messers 1 hinter den Schneidkanten 2 liegenden Längskanten desselben verlaufen gegenüber der Schneidkante 2 auf Grund einer schräg verlaufenden Aufbiegung 5 erhöht. Dadurch wird bei der Drehung des Messers ein Luftstrom geneigt zur Drehebene des Messers erzeugt.

Wie aus Fig. 2 bis 4 und 6 ersichtlich ist, weist das Messer 1 entlang seiner beiden Längskanten durchgehende Verdickungen 6 auf, die durch einen dünneren Steg 7 miteinander verbunden sind. Die Oberseiten dieser Verdickungen 6 sind zur Bildung von Schneidkanten 2 abgeschrägt, wobei die Unterseite und der abgeschrägte Bereich der Oberseite geschliffen sind.

Die Oberseite des Steges 7, welcher eine Dicke von etwa 2/3 der Dicke der Verdickungen 6 aufweist, verläuft mit den Oberseiten der Verdickungen eben, wogegen die Unterseite des Steges gegenüber jener der Verdickungen entsprechend vertieft verläuft. Dadurch ergibt sich eine weitgehende Freistellung der Unterseite des Messers im Bereich der Schneidkanten (wie aus den Fig. 2 und 4 ersichtlich ist), sodaß nur ein kleiner Teil der Unterseite des Messers 1 mit dem bereits abgelängten Gras in Kontakt kommen kann.

Der Übergang von den Verdickungen 6, die eine Breite von je etwa 20 % der Gesamtbreite aufweisen, erfolgt über eine hohlkehlenartige Ausrundung 8.

Die Ausführungsform gemäß den Fig. 1a - 6a unterscheidet sich von jener gemäß Fig. 1 - 6 dadurch, daß hier die in den äußeren Bereichen der Längskanten angeordneten Schneidkanten 2 in einer horizontalen Symmetrieebene angeordnet sind. Weiters sind statt den Aufbiegungen 5 die äußeren Bereiche des Messers 1' gegenüber seinem Mittelbereich 3 um die Längsachse des Messers in einander entgegengesetzten Richtungen eben verdreht, wobei die Schneidkanten 2 im wesentlichen parallel zum Mittelbereich 3 und außerhalb der Ebene desselben verlaufen. Außerdem verläuft der die Verdickungen 6 verbindende Steg 7, wie aus Fig. 6a ersichtlich, in der Mitte der Höhe derselben, sodaß sich ein in zwei zueinander senkrechten Richtungen symmetrisches Profil ergibt.

Die Verdrehung der äußeren,die Schneidkanten 2 tragenden Bereiche gegenüber dem Mittelbereich 3 beträgt zweckmäßigerweise etwas mehr als der halbe Keilwinkel der Schneiden, der etwa 20 - 45° beträgt. Dadurch ergibt sich wieder eine gegenüberliegend große Freistellung der Unterseite des Messers 1', um eine Berührung der Grasstummel mit der Unterseite des Messers zu vermeiden.

Auch bei der Ausführungsform gemäß den Fig. 1a-6a erfolgt der Übergang von den Verdickungen 6 zu dem Steg 7 über hohlkehlenartige Ausrundungen 8 und die Schneidenbereiche sind ebenfalls in einer Breite von etwa 3 mm gehärtet.

**Patentansprüche:**

1. Messer (1) für einen Rasenmäher mit rotierender Schneideinrichtung, welches zumindest an zwei einander diagonal gegenüberliegenden Endbereichen seiner Längskanten mit Schneiden versehen ist und dessen in Drehrichtung des Messers (1) hinter den Schneiden (2) liegenden Längskanten gegenüber den Schneiden erhöht verlaufen und mit mindestens einem zur Aufnahme von Verbindungselementen vorgesehenen Durchbruch (4) versehener Mittelbereich (3), dadurch gekennzeichnet, daß das Messer (1, 1') einen durchgehenden Querschnitt mit durchgehenden Schneiden aufweist, der in den an die Längskanten angrenzenden Zonen eine gegenüber dem mittleren Bereich größere Dicke aufweist, wobei die Dicke des mittleren Bereiches vorzugsweise 1/2 bis 2/3 der Dicke der Randzonen und die Breite der Randzonen vorzugsweise etwa 15 bis 30 % der gesamten Breite beträgt.

2. Messer nach Anspruch 1, dadurch gekennzeichnet, daß das Querschnittsprofil des Messers (1') zwei zueinander senkrecht stehende Symmetrieebenen aufweist und die mit Schneiden (2) versehenen Randbereiche des Messers (1, 1') um dessen Längsachse gegensinnig verdreht, vorzugsweise im wesentlichen jedoch eben sind.

3. Messer nach Anspruch 2, dadurch gekennzeichnet, daß die Schneiden (2) in dem mittleren Bereich des Messers in der horizontalen Symmetrieebene der Verdickungen (6) liegen.

4. Messer nach Anspruch 1, dadurch gekennzeichnet, daß das Querschnittsprofil des Messers (1) eine von Längskante zu Längskante durchgehende gerade obere Kante aufweist und die Unterseite im Mittelbereich eine nutartige Ausnehmung aufweist.

5. Messer nach einem der Ansprüche 1 bis 4, dadurch gekennzeichnet, daß lediglich schmale, die Schneidkanten (2) aufweisende Randzonen entlang den Längsrändern vergütet sind.

6. Messer nach einem der Ansprüche 1 bis 5, dadurch gekennzeichnet, daß der Übergang vom dünneren Mittelbereich zu den dickeren Randzonen mit einer hohlkehlenartigen Rundung (8) versehen ist.

7. Verfahren zur Herstellung eines Messers nach einem der Ansprüche 1 bis 6, dadurch gekennzeichnet, daß ein entsprechendes Stahlprofil vorzugsweise durch Warmwalzen hergestellt, danach im Durchlauf dessen Längskanten geschliffen mittels Erwärmung, vorzugsweise durch Hochfrequenz, und anschließendem Abschrecken gehärtet und angelassen, danach gerichtet und sodann abgelängt und in entsprechenden Abständen mit Aufbiegungen an den Längsseiten oder mit um die Längsachse gedrehten Abschnitten versehen und vorzugsweise gleichzeitig mit Durchbrüchen zur Aufnahme von Befestigungselementen versehen werden.

## Claims

1. A blade (1) for a lawnmower having a rotating cutter device, which is provided at least on two diagonally opposite end areas of its longitudinal edges with cutting edges and whose longitudinal edges lying behind the cutting edges (2) in the direction of rotation of the blade (1) extend raised up from the cutting edges, and a central area (3) provided with at least one opening (4) provided to receive connexion elements, characterized in that the blade (1, 1') has a continuous cross-section with continuous cutting edges, which cross-section in the zones adjacent to the longitudinal edges has a thickness greater than that of the central area, the thickness of the central area preferably amounting to between 1/2 and 2/3 of the thickness of the edge zones and the width of the edge zones preferably amounting to between approximately 15 and 30% of the total width.

2. A blade according to Claim 1, characterized in that the cross-sectional profile of the blade (1') comprises two planes of symmetry at right angles to one another and the edge areas of the blade (1, 1') provided with cutting edges (2) are turned in opposite directions about its longitudinal axis, being preferably, however, substantially level.

3. A blade according to Claim 2, characterized in that the cutting edges (2) are located in the central area of the blade in the horizontal plane of symmetry of the thickened portions (6).

4. A blade according to Claim 1, characterized in that the cross-sectional profile of the blade (1) comprises a straight upper edge extending from longitudinal edge to longitudinal edge and the underside has a groove-like recess in the central area.

5. A blade according to any one of Claims 1 to 4, characterized in that only narrow edge zones comprising the cutting edges (2) are heat-treated along the longitudinal edges.

6. A blade according to any one of Claims 1 to 5, characterized in that the transition from the thinner central area to the thicker edge zones is provided with a hollow-ground rounded portion (8).

7. A method of producing a blade according to any one of Claims 1 to 6, characterized in that a suitable steel section is produced preferably by hot rolling, its longitudinal edges are then ground in a complete sweep by means of heating, preferably with high frequency, and subsequent quenching is hardened and tempered, then straightened and then cut to length and at appropriate intervals given bends on the longitudinal sides or portions turned about the longitudinal axis and is preferably provided at the same time with openings for the reception of fastening elements.

## Revendications

1. Couteau (1) pour tondeuse à gazon avec dispositif de coupe rotatif, équipé de tranchants en au moins deux zones externes diagonalement opposées l'une à l'autre de ses arêtes longitudinales et dont les arêtes latérales situées dans le sens de rotation du couteau (1) à l'arrière des tranchants (2) sont rehaussées à l'opposé des tranchants, une zone médiane (3) comportant au moins un alésage (4) pour le montage d'éléments de fixation, caractérisé en ce que le couteau (1, 1') possède une section transversale continue avec des tranchants continus, section qui présente dans les zones avoisinant les arêtes longitudinales une épaisseur plus grande que dans la zone médiane, où l'épaisseur de la zone médiane s'élève selon un mode préférentiel de 1/2 à 2/3 de l'épaisseur des zones de bordures et la largeur des zones de bordures est selon un mode préférentiel d'environ 15 à 30 % de la largeur totale.

2. Couteau selon la revendication 1, caractérisé en ce que le profil de section transversale du couteau (1') possède deux plans de symétrie situés perpendiculairement l'un à l'autre et les zones de bordure munies de tranchants (2) du couteau (1, 1') sont tordus en sens inverses autour de l'axe longitudinal de celui-ci, mais sont de préférence sensiblement planes.

3. Couteau selon la revendication 2, caractérisé en ce que les tranchants (2) sont situés dans la zone médiane du couteau dans le plan de symétrie horizontal des épaississements (6).

4. Couteau selon la revendication 1, caractérisé en ce que le profil de section transversale du couteau (1) possède une arête supérieure rectiligne continue d'une arête longitudinale à l'autre, et le côté inférieur présente dans la zone médiane un évidement en forme de rainure.

5. Couteau selon une des revendications 1 à 4, caractérisé en ce que sont seules trempées d'étroites zones de bordure étroites formant les bords de coupe (2) le long des bords longitudinaux.

6. Couteau selon une des revendications 1 à 5, caractérisé en ce que le passage de la zone médiane plus mince aux zones de bordure plus épaisses comporte un arrondi en forme de gorge évidée (8).

7. Procede pour ia fabrication d'un couteau selon une des revendications 1 à 6, caractérisé en ce que l'on produit un profilé d'acier correspondant de préférence par laminage à chaud, ses arêtes latérales sont ensuite affutées avec chauffage dans la même passe, de préférence par haute fréquence, et ensuite durcies par trempage et revenu, après quoi le profile est dressé et mis à la longueur, puis l'on procède à des intervalles prédéterminés à des cintrages le long des côtés longitudinaux ou à la formation de sections tordues autour de l'axe longitudinal, avec perçage de préférence simultané de passages pour éléments de fixation.

FIG.1

FIG.2

FIG.3

FIG.4

FIG.5

FIG.6

FIG.1a

FIG.2a    FIG.3a    FIG.4a

FIG.5a

FIG.6a

0 069 110